(19) Europäisches Patentamt
European Patent Office
Office européen des brevets

(11) Veröffentlichungsnummer: **0 210 139**
**B1**

(12) **EUROPÄISCHE PATENTSCHRIFT**

(45) Veröffentlichungstag der Patentschrift: **19.09.90**

(51) Int. Cl.$^5$: **C 09 B 44/10,** D 06 P 1/41

(21) Anmeldenummer: **86810330.0**

(22) Anmeldetag: **21.07.86**

(54) **Kationische 1,2,3-Thiadiazolazoverbindungen.**

(30) Priorität: **26.07.85 CH 3241/85**

(43) Veröffentlichungstag der Anmeldung:
**28.01.87 Patentblatt 87/05**

(45) Bekanntmachung des Hinweises auf die Patenterteilung:
**19.09.90 Patentblatt 90/38**

(84) Benannte Vertragsstaaten:
**BE CH DE FR GB IT LI**

(56) Entgegenhaltungen:
**DE-A-2 147 809**
**GB-A-1 162 219**

(73) Patentinhaber: **CIBA-GEIGY AG**
**Klybeckstrasse 141**
**CH-4002 Basel (CH)**

(72) Erfinder: **Moser, Peter, Dr.**
**Waldeckweg 4**
**CH-4102 Binningen (CH)**

**EP 0 210 139 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

**Beschreibung**

Die Erfindung betrifft neue kationische 1,2,3-Thiadiazolazoverbindungen, Verfahren zu deren Herstellung und deren Verwendung als Farbstoffe zum Färben oder Bedrucken von kationisch färbbaren Materialien, insbesondere Textilmaterialien aus Polyacrylnitril, sauer modifiziertem Polyamid und sauer modifiziertem Polyester.

Die neuen kationischen 1,2,3-Thiadiazolazoverbindungen gemäss vorliegender Erfindung entsprechen der Formel

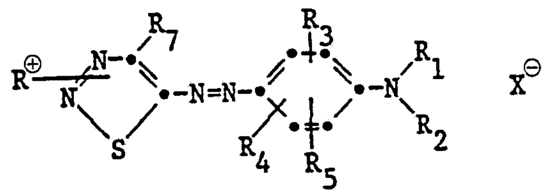

(1),

worin

R unsubstituiertes oder substituiertes Alkyl oder Alkenyl,

$R_1$ Wasserstoff oder unsubstituiertes oder substituiertes Alkyl oder Alkenyl,

$R_2$ Wasserstoff oder unsubstituiertes oder substituiertes Alkyl, Alkenyl, Cycloalkyl oder Phenyl, oder

$R_1$ und $R_2$ zusammen mit dem N-Atom einen 5- oder 6-gliedrigen heterocyclischen Ring, der gegebenenfalls noch ein oder zwei weitere Heteroatome als Ringglieder enthalten oder/und substituiert sein kann, oder $R_1$ zusammen mit $R_3$ in ortho-Stellung zur Aminogruppe einen teilhydrierten, gegebenenfalls substituierten 5- oder 6-gliedrigen heterocyclischen Ring, der gegebenenfalls noch ein zusätzliches N- oder O-Atom als Ringglied enthalten kann,

$R_3$ und $R_4$ unabhängig voneinander Wasserstoff, Alkyl, Alkoxy, Alkanoylamino oder Halogen,

$R_5$ Wasserstoff oder zusammen mit $R_4$ in ortho-Stellung die Ergänzung zu einem ankondensierten Benzolring,

$R_7$ Wasserstoff, gegebenenfalls substituiertes Phenyl oder Alkyl und

$X^{\ominus}$ ein Anion bedeuten.

Sofern Reste in obiger Formel als gegebenenfalls substituiert bezeichnet sind, kommen als Substituenten insbesondere nichtionische Substituenten oder Carboxyl in Betracht.

Nichtionische Substituenten sind vor allem die in der Farbstoffchemie üblichen, nicht dissoziierenden Substituenten wie z.B. Cyano, Hydroxy, Halogen (z.B. Fluor, Chlor, Brom), Nitro, Alkyl, Amino, Mono- oder Dialkylamino, Phenyl, Alkoxy, Acyl, Acyloxy, Alkoxycarbonyl oder Alkoxycarbonyloxy. Acyl bedeutet dabei insbesondere Alkylcarbonyl (Alkanoyl), gegebenenfalls substituiertes Benzoyl (Substituenten wie für Phenyl), Alkylsulfonyl, Phenylsulfonyl, Mono- oder Dialkylaminocarbonyl, Benzylaminocarbonyl oder Dialkylaminosulfonyl, vor allem aber Alkylcarbonyl (Alkanoyl).

Bevorzugte Substituenten für Alkylreste R, $R_1$ oder $R_2$ sind: Hydroxy, Halogen (z.B. F, Cl, Br), Cyano, Alkoxy, Carboxy, Aminocarbonyl, Alkoxycarbonyl, Acyl, Acyloxy (bevorzugte Bedeutungen für Acyl siehe oben, insbesondere Alkylcarbonyl), Phenyl, Phenoxy oder Benzyloxy. Die gleichen Substituenten kommen auch für Cycloalkylreste in Betracht, insbesondere aber Alkyl, Alkoxy, Halogen oder Cyano.

Bevorzugte Substituenten für Phenylreste $R_2$ sind: Cyano, Hydroxy, Halogen (z.B. F, Cl, Br), Alkyl, Alkoxy, Alkoxycarbonyl, Carboxyl, Aminocarbonyl, Nitro, Aminosulfonyl, Alkylcarbonylamino oder Benzoylamino. Die jeweiligen Phenylreste können von diesen Substituenten beispielsweise 1—3, insbesondere 1 oder 2 enthalten.

In den obigen Substituenten sowie in der gesamten übrigen Beschreibung haben, sofern nichts anderes angegeben ist, Alkylgruppen als solche oder Alkylgruppen als Teile von zusammengesetzten Substituenten (z.B. Alkoxy, Alkoxycarbonyl, Dialkylamino usw.) insbesondere 1 bis 8, vorzugsweise 1—4, C-Atome. Geeignete Alkylgruppen sind z.B. Methyl, Aethyl, n- oder iso-Propyl, n-, sec.- oder tert.-Butyl.

Als Cycloalkylgruppen sind Cyclopentyl und Cyclohexyl bevorzugt. Halogen ist beispielsweise Chlor, Brom oder Fluor, insbesondere Chlor. Alkenylgruppen weisen z.B. 2—8, insbesondere 2—5, C-Atome auf. Als Substituenten für sie kommen etwa diejenigen in Betracht, die oben für Alkyl angegeben werden; vorzugsweise sind sie jedoch unsubstituiert.

$R_1$ und $R_2$ können zusammen mit dem Stickstoffatom, an das sie gebunden sind, einen 5- oder 6-gliedrigen, vorzugsweise gesättigten, Heterocyclus bilden. Dieser kann neben dem N-Atom noch 1 oder 2 Heteroatome, insbesondere aus der Gruppe O, N und S, als Ringglieder enthalten, vorzugsweise ein weiteres Heteroatom, vor allem N oder S. Diese Heterocyclen können substituiert sein, z.B. mit Alkyl, Hydroxyalkyl, Cyanoalkyl oder Alkoxy. Beispiele für solche Heterocyclen sind: Pyrrolidin, Piperidin, Morpholin, Piperazin, N-Methyl-, N-Aethyl- oder N-Hydroxyäthyl-piperazin, Oxazolidin, Thiomorpholin und Pyrazolidin, wobei die 4 erstgenannten bevorzugt sind.

Die von $R_1$ und $R_3$ gemeinsam mit dem N-Atom gebildete Ergänzung zu einem teilhydrierten heterocyclischen Ring führt zu einem an den Benzolring ankondensierten 5- oder 6-gliedrigen, ein oder 2N-Atome bzw. ein N- und ein O-Atom enthaltenden Heterocyclus, der mindestens eine Doppelbindung aufweist. Ein derartiger Heterocyclus kann auch substituiert sein, beispielsweise durch Alkyl, Alkoxy,

Halogen oder Hydroxy, insbesondere durch Alkyl. Die Zahl der Alkylgruppen kann dabei 1 bis 6, z.B. 1 bis 5, insbesondere 1 bis 4 oder 1 bis 3 sein. Besonders bevorzugt sind dabei Methylgruppen.

Beispielsweise bildet $R_1$ und $R_3$ gemeinsam mit dem N-Atom und dem ankondensierten Benzolring einen gegebenenfalls durch 1 bis 5 $C_1$—$C_4$-Alkylgruppen substituierten Dihydroindol-, Tetrahydrochinolin-, Tetrahydrochinoxalin- oder Tetrahydro-1,4- benzoxazinrest, wobei der Dihydroindol- und Tetrahydrochinolinrest bevorzugt sind. Das Stickstoffatom ist selbstverständlich durch den Rest $R_2$ substituiert.

Es versteht sich von selbst, dass die Erfindung auch alle möglichen tautomeren Formen der Verbindungen der Formel (1) umfasst.

Als Anion $X^{\ominus}$ kommen die für kationische Farbstoffe üblichen organischen und anorganischen, vorzugsweise farblosen, Anionen in Betracht. Das Anion wird im allgemeinen durch das Herstellungsverfahren (z.B. durch die Quaternierung) oder durch die eventuell vorgenommene Reinigung der rohen Verbindung eingeführt. Man kann Anionen aber auch gezielt nach üblichen Verfahren gegeneinander austauschen.

Beispiele für mögliche Anionen $X^{\ominus}$ sind: Halogenid-, Bortetrafluorid-, Rhodanid-, Sulfat-, Alkylsulfat-, Aminosulfat-, Chlorat-, Perchlorat-, Carbonat-, Bicarbonat-, Phosphat-, Phosphormolybdat-, Phosphorwolframat-, Phosphorwolframmolybdat-, Benzolsulfonat-, Chlorbenzolsulfonat-, Naphthalinsulfonat-, Toluolsulfonat-, Oxalat-, Maleinat-, Formiat-, Acetat-, Propionat-, Lactat-, Succinat-, Chloracetat-, Tartrat-, Methansulfonat- und Benzoationen, ferner komplexe Anionen, insbesondere jene von Chlorzinkdoppelsalzen, z.B. das Tetrachlorzinkation.

Zweckmässig bedeutet $X^{\ominus}$ ein Halogenid-, Methylsulfat-, Aethylsulfat-, Phosphat-, Sulfat-, Carbonat-, Benzolsulfonat-, Toluolsulfonat-, 4-Chlorbenzolsulfonat-, Acetat-, Formiat- oder Tetrachlorzinkation; insbesondere liegen die erfindungsgemässen Verbindungen als Halogenide (vor allem Chloride), Methosulfate, Aethosulfate, Sulfate, Benzol- oder Toluolsulfonate oder als Chlorzink-Doppelsalze (z.B. Tetrachlorzinkate) vor.

Von den Verbindungen der Formel (1) sind diejenigen bevorzugt, worin R unsubstituiertes oder durch Hydroxy, Halogen, Cyano, Alkoxy, Carboxy, Aminocarbonyl, Alkoxycarbonyl, Acyloxy, Acyl, Phenyl oder Phenoxy substituiertes Alkyl, $R_1$ Wasserstoff oder unsubstituiertes oder durch Hydroxy, Halogen, Cyano, Alkoxy, Carboxy, Aminocarbonyl, Alkoxycarbonyl, Acyloxy, Acyl, Phenyl oder Phenoxy substituiertes Alkyl, $R_2$ die Bedeutung von $R_1$ hat oder unsubstituiertes oder durch Cyano, Hydroxy, Halogen, Alkyl oder Alkoxy substituiertes Phenyl, oder $R_1$ und $R_2$ zusammen mit dem N-Atom einen gegebenenfalls alkyl- oder hydroxyalkyl-substituierten 5- oder 6-gliedrigen gesättigten heterocyclischen Ring, der gegebenenfalls zusätzlich noch ein N- oder O-Atom als Ringglied enthalten kann oder $R_1$ zusammen mit $R_3$ in ortho-Stellung zur Aminogruppe einen teilhydrierten, gegebenenfalls mit Alkyl oder Alkoxy substituierten 5- oder 6-gliedrigen heterocyclischen Ring, der gegebenenfalls zusätzlich noch ein N- oder O-Atom als Ringglied enthalten kann, bedeuten, $R_7$ Wasserstoff ist und $R_3$, $R_4$, $R_5$ und $X^{\ominus}$ wie in Formel (1) definiert sind.

Hervorzuheben sind ferner Verbindungen der Formel (1), worin R unsubstituiertes oder durch Hydroxy, Halogen, Cyano, Phenyl oder $C_1$—$C_4$-Alkoxy substituiertes $C_1$—$C_4$-Alkyl, $R_1$ und $R_2$ unabhängig jeweils Wasserstoff oder unsubstituiertes oder durch Hydroxy, Halogen, Cyano, $C_1$—$C_4$-Alkoxy, Carboxy, Aminocarbonyl, Phenyl oder $C_1$—$C_5$-Alkoxycarbonyl substituiertes $C_1$—$C_4$-Alkyl oder $R_1$ und $R_2$ zusammen mit dem N-Atom einen gegebenenfalls durch $C_1$—$C_4$-Alkyl oder $C_1$—$C_4$-Hydroxyalkyl substituierten Pyrrolidin-, Piperidin-, Morpholin- oder Piperazinring oder $R_1$ zusammen mit $R_3$ in ortho-Stellung zur Aminogruppe und mit dem ankondensierten Benzolring einen gegebenenfalls durch $C_1$—$C_4$-Alkyl substituierten Dihydroindol-, Tetrahydrochinolin-, Tetrahydrochinoxalin- oder Tetrahydro-1,4-benzoxazinring, $R_3$ und $R_4$ unabhängig voneinander Wasserstoff, $C_1$—$C_4$-Alkyl, $C_1$—$C_4$-Alkoxy oder Halogen und $R_5$ Wasserstoff oder zusammen mit $R_4$ in ortho-Stellung die Ergänzung zu einem ankondensierten Benzolring und $R_7$ Wasserstoff bedeuten.

Von den erfindungsgemässen Verbindungen der Formel (1) sind jene bevorzugt, in denen mindestens einer, vorzugsweise beide Reste $R_1$ und $R_2$ von Wasserstoff verschieden sind.

In allen vorgenannten Verbindungen der Formel (1) bedeuten insbesondere $R_4$ und $R_5$ Wasserstoff und $R_3$ Wasserstoff oder zusammen mit $R_1$ in ortho-Stellung zur Aminogruppe und mit dem ankondensierten Benzolring einen unsubstituierten oder mit 1 bis 5 $C_1$—$C_4$-Alkyl-, vorzugsweise Methylgruppen, substituierten Dihydroindol- oder Tetrahydrochinolinrest.

$R_7$ bedeutet vorzugsweise Wasserstoff.

Von praktischer Bedeutung sind vor allem jene Verbindungen der Formel (1), worin R $C_1$—$C_4$-Alkyl, $C_1$—$C_4$-Hydroxyalkyl oder Benzyl, $R_1$ und $R_2$ unabhängig voneinander $C_1$—$C_4$-Alkyl, $C_1$—$C_4$-Hydroxyalkyl, $C_1$—$C_4$-Alkoxy-$C_1$—$C_4$-Alkyl, $C_1$—$C_5$-Cyanoalkyl, $C_1$—$C_4$-Halogenalkyl oder Benzyl oder $R_1$ und $R_2$ zusammen mit dem N-Atom einen Piperidin-, Morpholin- oder Piperazinring oder $R_1$ zusammen mit $R_3$ in ortho-Stellung zur Aminogruppe und mit dem ankondensierten Benzolring einen gegebenenfalls mit 1 bis 4 $C_1$—$C_4$-Alkyl-, vorzugsweise Methylgruppen, substituierten Tetrahydrochinolinrest, $R_3$ Wasserstoff oder zusammen mit $R_1$ den vorstehend beschriebenen Rest, $R_4$ Wasserstoff, $C_1$—$C_4$-Alkyl, $C_1$—$C_4$-Alkoxy oder Halogen, vorzugsweise Wasserstoff, und $R_5$ Wasserstoff bedeuten, wobei jene bevorzugt sind, worin R $C_1$—$C_4$-Alkyl, $R_1$ und $R_2$ unabhängig voneinander $C_1$—$C_4$-Alkyl oder $R_1$ zusammen mit $R_3$ in ortho-Stellung zur Aminogruppe und mit dem ankondensierten Benzolring einen unsubstituierten oder mit 1—4 Methylgruppen substituierten Tetrahydrochinolinrest, $R_3$ Wasserstoff oder zusammen mit $R_1$ den

vorstehend beschriebenen Rest und $R_4$, $R_5$ und $R_7$ jeweils Wasserstoff bedeuten.

Die neuen kationischen 1,2,3-Thiadiazolazoverbindungen der Formel (1) können nach an sich bekannten Verfahren hergestellt werden. Man erhält sie beispielsweise, wenn man 5-Amino-1,2,3-thiadiazol, das in 4-Stellung durch Alkyl oder gegebenenfalls substituiertes Phenyl substituiert sein kann, diazotiert, auf eine Kupplungskomponente der Formel

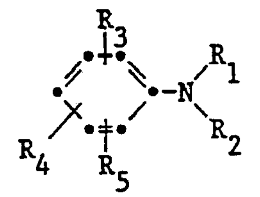

(2)

kuppelt und das Kupplungsprodukt mit einer Verbindung der Formel R—X′ quaterniert, wobei R bis $R_5$ wie in Formel (1) definiert sind und X′ einen bei der Quaternierung in das Anion $X^{\ominus}$ überführbaren Rest bedeutet.

Die Ausgangsprodukte, 5-Amino-1,2,3-thiadiazole, sind bekannt oder können nach an sich bekannten Methoden hergestellt werden. 5-Amino-1,2,3-thiadiazol kann z.B. gemäss DE—A—2 636 994 nach folgenden schematischem Reaktionsschema hergestellt werden:

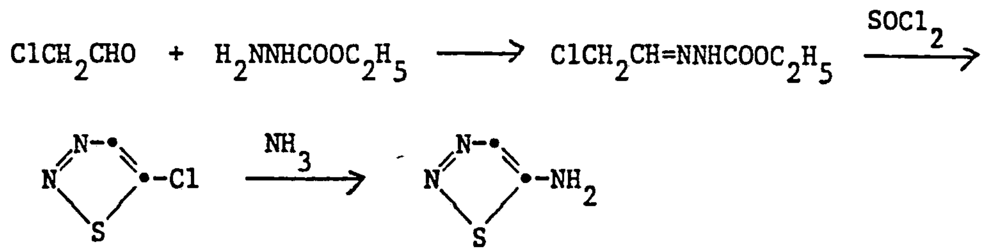


Die Kupplungskomponenten der Formel (2) sind als in der Chemie der Azofarbstoffe übliche Kupplungskomponenten bekannt.

Die Diazotierung der 5-Amino-1,2,3-thiadiazole erfolgt in an sich bekannter Weise, etwa mit Natriumnitrit in saurem, z.B. salzsaurem oder schwefelsaurem, wässrigem Medium. Die Diazotierung kann aber auch mit anderen Diazotierungsmitteln, z.B. mit Nitrosylschwefelsäure ausgeführt werden. Dabei kann eine zusätzliche Säure im Reaktionsmedium anwesend sein, z.B. Phosphorsäure, Schwefelsäure, Essigsäure, Salzsäure oder Mischungen dieser Säuren, z.B. Mischungen aus Phosphorsäure und Essigsäure. Zweckmässig wird die Diazotierung bei Temperaturen von −10 bis 30°C, z.B. von −10°C bis Raumtemperatur, durchgeführt.

Die Kupplung des diazotierten Thiadiazols auf die Kupplungskomponente der Formel (2) erfolgt ebenfalls in bekannter Weise, beispielsweise in saurem, wässrigem oder wässrig-organischem Medium, vorteilhaft bei Temperaturen von −10 bis 30°C, insbesondere unter 10°C. Als Säuren verwendet man z.B. Salzsäure, Essigsäure, Schwefelsäure oder Phosphorsäure. Diazotierung und Kupplung können beispielsweise im Eintopfverfahren, also im gleichen Reaktionsmedium, durchgeführt werden.

Die Quaternierung erfolgt zweckmässig in einem indifferenten organischen Lösungsmittel, beispielsweise in einem Kohlenwasserstoff, Chlorkohlenwasserstoff oder Nitrokohlenwasserstoff, wie Benzol, Toluol, Xylol, Tetrachloräthan, Chloroform, Tetrachlorkohlenstoff, Mono- oder Dichlorbenzol oder Nitrobenzol, in einem Säureamid oder Säureanhydrid, wie Dimethylformamid, N-Methylacetamid oder Essigsäureanhydrid, in Dimethylsulfoxid oder in einem Keton, wie Aceton oder Methyläthylketon. Anstelle eines organischen Lösungsmittels kann auch ein Ueberschuss des Alkylierungsmittels verwendet werden. Es kann aber auch in wässrigem Medium gearbeitet werden, z.B. in wässriger Suspension oder etwa in Eisessig. Die Quaternierung wird vorteilhaft bei erhöhter Temperatur, z.B. 30—200°C, insbesondere 80—150°C, gegebenenfalls unter Zusatz von säurebindenden Mitteln, wie einer anorganischen Base, z.B. Magnesiumoxid, Magnesiumcarbonat, Soda, Calciumcarbonat oder Natriumbicarbonat und gegebenenfalls unter Druck, vorgenommen. Die jeweils günstigsten Bedingungen lassen sich durch einen Vorversuch leicht ermitteln.

Es werden zur Quaternierung bekannte Quaternierungsmittel R—X′ eingesetzt, die den Rest R einführen und deren Rest X′ in das Anion $X^{\ominus}$ übergeführt wird. Einige Beispiele für Quaternierungsmittel R—X′ sind: Alkylhalogenide, Halogenacetamide, β-Halogenpropionitrile, Halogenhydrine, Alkylenoxide, Alkylester der Schwefelsäure oder Alkylester organischer Sulfonsäuren, beispielsweise Methylchlorid, -bromid oder -jodid, Aethylchlorid, -bromid oder -jodid, Propylbromid oder -jodid, Butylbromid, Benzylchlorid oder -bromid, Chloracetamid, β-Chlorpropionitril, Aethylenchlorhydrin, Dimethylsulfat, Diäthylsulfat, Dibutylsulfat, Benzolsulfonsäuremethylester, p-Toluolsulfonsäuremethyl-, -äthyl-, -propyl- oder -butylester, n- und iso-Propyl- und n-, sec.- und tert. Butylester der Benzolsulfonsäure, Allylchlorid oder -bromid, Methallylchlorid- oder -bromid, Trimethyloxonium-borfluorid, 1,4-Dichlorpropen-(2), 1-Chlor-buten-(2), 1,2-Dichlor-propen-(2), 1-Chlor-2-vinyl-propen-(2), 1-Chlor-pentadien(2,4), sowie Acrylnitril, Acrylsäure, Acrylsäureamid, Acrylsäuremethylester, Aethylenoxid, Propylenoxid.

Der Rest X' bedeutet also vorzugsweise Halogen (z.B. Cl, Br, J),

$Alkyl-SO_4^-$ oder 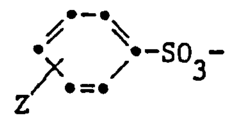

(Z = H, Halogen, Methyl).

Nach der Quaternierung können die neuen Verbindungen der Formel (1) vom Reaktionsmedium getrennt und getrocknet oder direkt als Lösung verwendet werden. Falls gewünscht oder erforderlich, (z.B. aus Gründen der Löslichkeit) kann in den erhaltenen Verbindung der Formel (1) das Anion $X^{\ominus}$ in an sich bekannter Weise gegen ein anderes Anion ausgetauscht werden.

Verwendung finden die neuen kationischen 1,2,3-Thiadiazolazoverbindungen der Formel (1) als Farbstoffe zum Färben und, unter Zusatz von Binde- und Lösungsmitteln, zum Bedrucken von mit kationischen Farbstoffen anfärbbaren Materialien, insbesondere Textilfasermaterialien; diese Materialien bestehen z.B. aus Homo- oder Mischpolymerisaten des Acrylnitrils (Polyacrylnitril) oder synthetischen Polyamiden oder Polyestern, welche durch saure Gruppen modifiziert sind. Desweiteren dienen die neuen kationischen Azoverbindungen auch zum Färben von Nasskabel (Färben von Fasern im Gelzustand), Kunststoffmassen, vorzugsweise aus den angegebenen Polymeren, sowie von tannierten Cellulosematerialien, von Leder und Papier und vor allem zum Färben von Mischgeweben aus Polyacrylnitrilmaterial und Wolle. Die genannte Verwendung der erfindungsgemässen Azoverbindungen sowie ein Verfahren zum Färben oder Bedrucken der vorstehend genannten Materialien, das darin besteht, eine oder mehrere der Verbindungen der Formel (1) auf besagte Materialien aufzubringen oder diesen einzuverleiben, sind ebenfalls Gegenstände der vorliegenden Erfindung, ebenso wie das durch dieses Färbeverfahren erhaltene gefärbte Material.

Zum Färben mit den kationischen Farbstoffen der allgemeinen Formel (1) eignen sich insbesondere Flocken, Fasern, Fäden, Bänder, Gewebe oder Gewirke aus Polyacrylnitril oder aus mindestens 85% Acrylnitril-Anteil enthaltenden Mischpolymerisaten des Acrylnitrils mit anderen Vinylverbindungen, wie Vinylchlorid, Vinylidenchlorid, Vinylfluorid, Vinylacetat, Vinylpyridin, Vinylimidazol, Vinylalkohol, Acryl- und Methacrylsäureestern und -amiden, as. Dicyanäthylen. Ebenso können Flocken, Fasern, Fäden, Bänder, Gewebe oder Gewirke aus sauer modifizierten synthetischen Materialien, insbesondere aus sauer modifizierten aromatischen Polyestern sowie sauer modifizierten Polyamidfasern gefärbt werden. Sauer modifizierte aromatische Polyester sind beispielsweise Polykondensationsprodukte aus Sulfoterephthalsäure und Aethylenglykol, d.h. sulfonsäuregruppenhaltige Polyäthylenglykolterephthalate.

Man färbt vorzugsweise aus wässrigem neutralem oder saurem Medium nach dem Ausziehverfahren, gegebenenfalls unter Druck oder nach dem Kontinueverfahren. Man geht dabei z.B. bei etwa 40 bis 60°C mit dem zu färbenden Material in das Färbebad ein und färbt dann bei Kochtemperatur. Man kann auch unter Druck über 100°C, z.B. bei 110—130°C, in einem Druckfärbeapparat färben. Sofern Textilmaterial gefärbt wird, kann dieses dabei in verschiedenartigster Form vorliegen, beispielsweise als Faser, Faden, Gewebe, Gewirke, Stückware oder Fertigware.

Die erfindungsgemässen Verbindungen der Formel (1) führen, wenn sie auf die oben genannten Materialien appliziert werden, zu vorwiegend blauen Färbungen bzw. Drucken, die sich durch sehr gute Eigenschaften, vor allem hohe pH-Stabilität, Dämpf-, Reib- und Sublimierechtheit, sehr gutes Ziehvermögen und hohe Lichtechtheit auszeichnen. Vor allem die niedrigmolekularen Vertreter zeigen auch ein sehr gutes Migriervermögen und führen daher zu egalen Färbungen.

Die erfindungsgemässen Verbindungen der Formel (1) können als Farbstoffe für die oben beschriebenen Zwecke als Einzelverbindungen oder aber in Mischungen verwendet werden, die mindestens 2 Verbindungen der Formel (1) enthalten.

In der DE—A—21 47 809 ist bereits die Verwendung von 2-Amino-1,3,4-thiadiazolen und 5-Amino-1,2,4-thiadiazolen als Diazokomponenten für kationische Farbstoffe beschrieben. 5-Amino-1,2,3-thiadiazole sind jedoch nicht erwähnt.

Die folgenden Beispiele veranschaulichen die Erfindung weiter; Teile und Prozente beziehen sich, sofern nichts anderes angegeben ist, auf das Gewicht. Schmelzpunkte sind unkorrigiert.

## Beispiel 1

10,0 Teile 5-Amino-1,2,3-thiadiazol werden zusammen mit 12,1 Teilen N,N-Dimethylanilin in 150 Vol.-Teilen Wasser und 15 Vol.-Teilen 30 %iger Salzsäure gelöst. Die Lösung wird auf −5°C gekühlt, dann werden unter Rühren 50 Vol.-Teile 2N Natriumnitritlösung langsam zugetropft. Ein rotbrauner Niederschlag scheidet sich ab. Man rührt 3 Stunden bei −5 bis 0°C nach, filtriert dann den Niederschlag ab, wäscht mit Wasser salz- und säurefrei und trocknet. Es werden 15,0 g der Verbindung der Formel

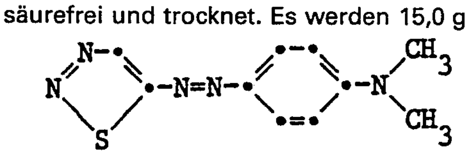 (3)

erhalten.

11,65 Teile dieser Verbindung werden in 100 Vol.-Teilen Dimethylformamid bei 100—110°C gelöst. Man tropft innerhalb einer Stunde 18,9 Teile Dimethylsulfat zu und rührt weitere 4 Stunden bei dieser Temperatur. Die Quaternierung ist dann vollständig. Man destilliert unter verminderten Druck das Lösungsmittel ab, löst das zurückbleibende Oel in 250 Vol.-Teilen Wasser, filtriert die erhaltene Lösung und fällt das Gewünschte Produkt durch Zugabe von 50 Teilen Natriumchlorid und 25 Teilen Zinkchlorid aus. Der Niederschlag wird abgenutscht, mit wenig gesättigter NaCl-Lösung gewaschen und getrocknet. Man erhält so 14 g der Verbindung der Formel

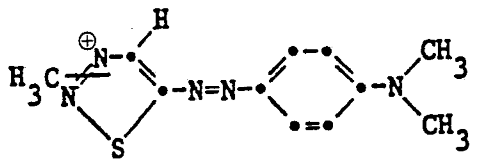 1/2 $ZnCl_4^{2\ominus}$ (4).

Sie färbt Polyacrylnitril in lichtechten neutralen Blautönen an.

Beispiel 2

Wiederholt man Beispiel 1, setzt jedoch anstelle von N,N-Dimethylanilin die äquivalente Menge N,N-Diäthylanilin ein, so erhält man die Verbindung der Formel

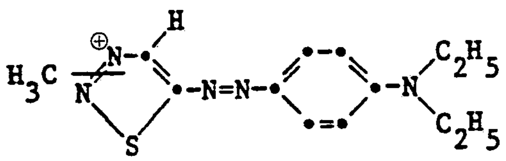 1/2 $ZnCl_4^{2\ominus}$ (5),

die auf Polyacrylnitril eine lichtechte neutrale Blaufärbung ergibt.

Beispiel 3

Wiederholt man Beispiel 1, setzt jedoch anstelle von N,N-Dimethylanilin die äquivalente Menge 1,2,2,4-Tetramethyl-1,2,3,4-tetrahydrochinolin ein, so erhält man die Verbindung der Formel

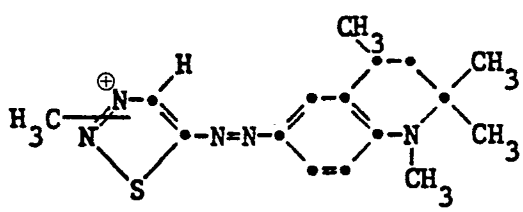 1/2 $ZnCl_4^{2\ominus}$ (6),

die auf Polyacrylnitril eine lichtechte grünstichige Blaufärbung ergibt.

Beispiele 4—16

Weitere analog Beispiel 1 herstellbare Farbstoffe der allgemeinen Formel

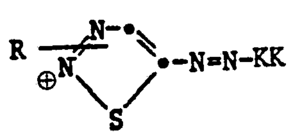 $X^{\ominus}$

sind in der nachfolgenden Tabelle zusammengestellt.

| Bsp. | R | KK | $X^{\ominus}$ | Nuance auf Polyacrylnitril |
|---|---|---|---|---|
| 4 | $CH_3$ | 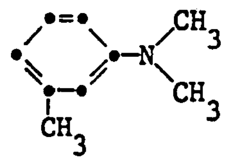 | $Cl^{\ominus}$ | grünstichiges Blau |
| 5 | $CH_3$ | 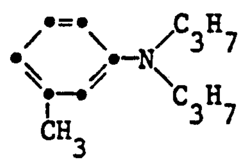 | $Cl^{\ominus}$ | grünstichiges Blau |
| 6 | $CH_2CH_2OH$ | 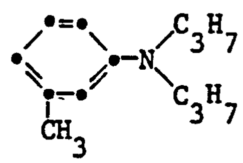 | 1/2 $ZnCl_4^{2-}$ | grünstichiges Blau |
| 7 | $CH_3$ | 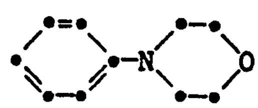 | 1/2 $ZnCl_4^{2-}$ | rotstichiges Blau |
| 8 | $CH_3$ | 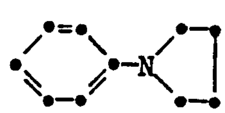 | 1/2 $ZnCl_4^{2-}$ | Blau |

| Bsp. | R | KK | $X^{\ominus}$ | Nuance auf Polyacrylnitril |
|---|---|---|---|---|
| 9 | $CH_3$ | 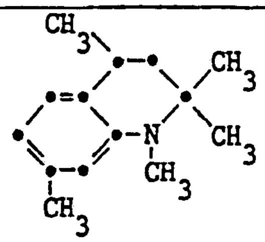 | $Cl^{\ominus}$ | grünstichiges Blau |
| 10 | $CH_2CH_2OH$ | 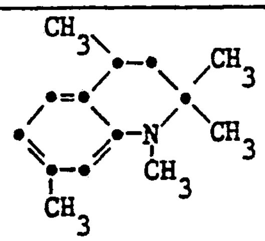 | 1/2 $ZnCl_4^{2\ominus}$ | grünstichiges Blau |
| 11 | $CH_3$ | 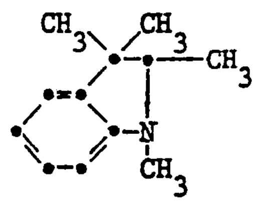 | $Cl^{\ominus}$ | grünstichiges Blau |
| 12 | $CH_3$ | 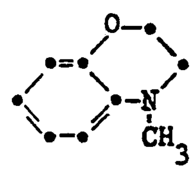 | 1/2 $ZnCl_4^{2\ominus}$ | grünstichiges Blau |
| 13 | $CH_3$ | 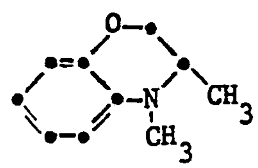 | 1/2 $ZnCl_4^{2\ominus}$ | grünstichiges Blau |
| 14 | $CH_3$ | 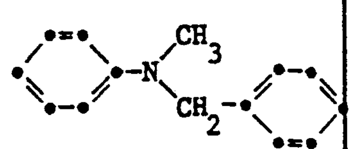 | $Cl^{\ominus}$ | Blau |

| Bsp. | R | KK | $X^{\ominus}$ | Nuance auf Polyacrylnitril |
|---|---|---|---|---|
| 15 | $CH_3$ | 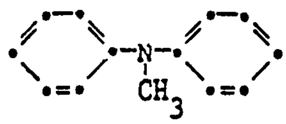 | $Cl^{\ominus}$ | grünstichiges Blau |
| 16 | $CH_2-\underset{OH}{CH}-CH_3$ | 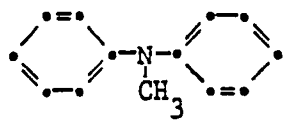 | 1/2 $ZnCl_4^{2-}$ | grünstichiges Blau |
| 17 | $CH_3$ | 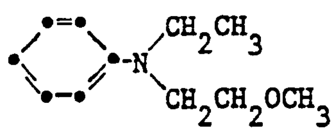 | $Cl^{\ominus}$ | grünstichiges Blau |
| 18 | $CH_3$ | 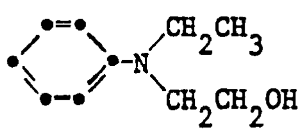 | 1/2 $ZnCl_4^{2-}$ | grünstichiges Blau |
| 19 | $CH_3$ | 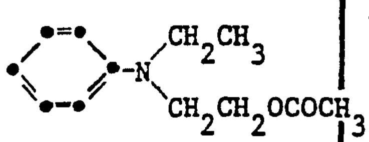 | $Cl^{\ominus}$ | Blau |
| 20 | $CH_3$ | 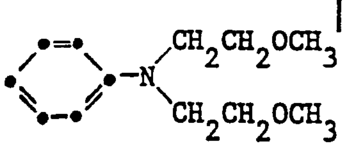 | $Cl^{\ominus}$ | Blau |

| Bsp. | R | KK | $X^{\ominus}$ | Nuance auf Polyacrylnitril |
|---|---|---|---|---|
| 21 | $CH_3$ | 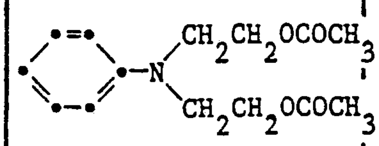 | 1/2 $ZnCl_4^{2\ominus}$ | Blau |
| 22 | $CH_3$ | 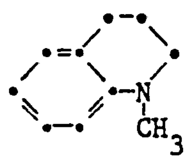 | $Cl^{\ominus}$ | grünstichiges Blau |
| 23 | $CH_3$ | 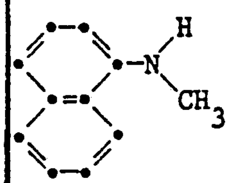 | $Cl^{\ominus}$ | grünstichiges Blau |
| 24 | $CH_3$ | 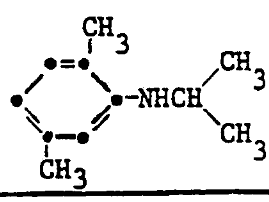 | 1/2 $ZnCl_4^{2\ominus}$ | Blau |
| 25 | $CH_3$ | 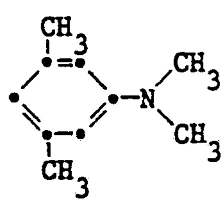 | $Cl^{\ominus}$ | stark rotstichiges Blau |
| 26 | $CH_3$ | 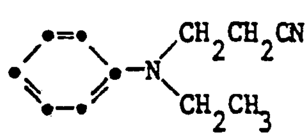 | $Cl^{\ominus}$ | rotstichiges Blau |

Beispiel 27

Polyacrylnitrilfasergewebe wird bei 60°C im Flottenverhältnis 1:80 in ein wässriges Bad eingebracht, das pro Liter 0,125 g Eisessig, 0,375 g Natriumacetat und 0,05 g der Verbindung der Formel (4) (oder die entsprechende Menge einer festen oder flüssigen Präparation dieser Verbindung) enthält. Man erhitzt innerhalb von 20 bis 30 Minuten zum Sieden und hält das Bad 90 Minuten bei dieser Temperatur. Nach dem Spülen erhält man eine egale blaue Färbung mit guten Echtheitseigenschaften.

Beispiel 28

Gewebe aus sauer modifizierten Polyesterfasern wird bei 20°C im Flottenverhältnis 1:40 in ein wässriges Bad eingebracht, das pro Liter 3 g Natriumsulfat, 2 g Ammoniumsulfat und 2,5 g eines Carriers auf der Basis eines nicht-ionogenen Färbereihilfsmittels enthält und mit Ameisensäure auf einen pH-Wert von 5,5 eingestellt wird. Man erhitzt auf 60°C und setzt 0,15 g der Verbindung der Formel (4) oder die entsprechende Menge einer festen oder flüssigen Präparation dieser Verbindung zu und erwärmt in etwa 30 Minuten zum Sieden. Man hält das Bad 60 Minuten bei dieser Temperatur. Anschliessend wird gespült und getrocknet. Man erhält eine blaue Färbung mit guten Echtheitseigenschaften.

Beispiel 29

Gewebe aus sauer modifizierten Polyesterfasern wird bei 20°C im Flottenverhältnis 1:30 in ein wässriges Bad eingebracht, welches pro Liter 6 g Natriumsulfat, 2 g Ammoniumsulfat und 0,15 g der Verbindung der Formel (4) oder die entsprechende Menge einer festen oder flüssigen Präparation dieser Verbindung enthält. Mit Ameisensäure wird ein pH-Wert von 5,5 eingestellt. Man erwärmt im geschlossenen Gefäss innerhalb von 45 Minuten auf 120°C und behält diese Temperatur unter Schütteln über 60 Minuten bei. Nach dem Spülen und Trocknen erhält man eine blaue Färbung mit guten Echtheitseigenschaften.

Beispiel 30

Gewebe aus sauer modifizierten Polyamidfasern wird bei 20°C im Flottenverhältnis 1:80 in ein wässriges Bad gebracht, das pro Liter 3,6 g Kaliumdihydrogenphosphat, 0,7 g Dinatriumphosphat, 1 g eines Hilfsmittels, wie z.B. ein Umsetzungsprodukt eines Phenols mit überschüssigem Aethylenoxid und 0,075 g der Verbindung der Formel (4) (oder die entsprechende Menge einer festen oder flüssigen Präparation dieser Verbindung) enthält. Man erhitzt in etwa 30 Minuten zum Sieden und hält das Bad 60 Minuten bei dieser Temperatur. Nach dem Spülen und Trocknen erhält man eine blaue Färbung mit guten Echtheitseigenschaften.

Setzt man in den Beispielen 17—30 anstelle der Verbindung der Formel (4) die Verbindung der Formel (5) bzw. (6) ein, so erhält man ebenfalls blaue Färbungen mit guten Echtheiten.

Beispiel 31

4 g eines Polyacrylnitril/Wolle-Stapelmischgewebes, enthaltend einen PAC-Anteil von 55%, werden in einen AHIBA-Laborfärbeapparat, enthaltend eine wässerige Färbeflotte mit 5% Glaubersalz calz., 2% Essigsäure 80% und 1% eines handelsüblichen Fällungsinhibitors bei ca. 50°C eingefahren. Nach 10 Minuten werden 0,15% von C.I. Acid Blue 225 zugesetzt und das Färbebad anschliessend innert 30 bis 40 Minuten auf eine Temperatur von 80°C erhitzt. Nach Einstellen des pH's auf 4 bis 4,5 werden 0,1% des Farbstoffes der Formel

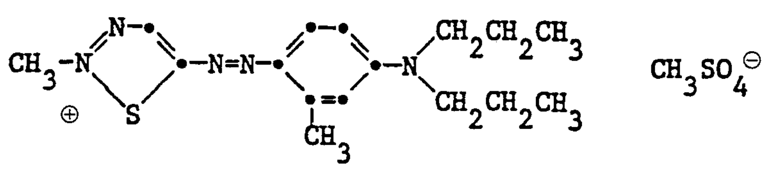

zugesetzt, dann das Färbebad innert weiterer 30 bis 40 Minuten auf eine Temperatur von 98—100°C weiter erhitzt und während 45 Minuten bei dieser Temperatur gehalten (Flottenverhältnis 1:40). Man lässt das Färbebad abkühlen, spült anschliessend und erhält ein einwandfrei uni-blau gefärbtes Gewebe.

## Patentansprüche

1. 1,2,3-Thiadiazolazoverbindungen der Formel

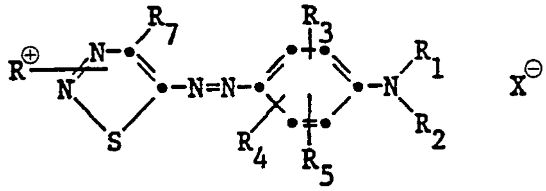

(1),

worin

$R$ unsubstituiertes oder substituiertes Alkyl oder Alkenyl,

$R_1$ Wasserstoff oder unsubstituiertes oder substituiertes Alkyl oder Alkenyl,

$R_2$ Wasserstoff oder unsubstituiertes oder substituiertes Alkyl, Alkenyl, Cycloalkyl oder Phenyl, oder

$R_1$ und $R_2$ zusammen mit dem N-Atom einen 5- oder 6-gliedrigen heterocyclischen Ring, der gegebenenfalls noch ein oder zwei weitere Heteroatome als Ringglieder enthalten oder und substituiert sein kann, oder $R_1$ zusammen mit $R_3$ in ortho-Stellung zur Aminogruppe einen teilhydrierten, gegebenenfalls substituierten 5- oder 6-gliedrigen heterocyclischen Ring, der gegebenenfalls noch ein zusätzliches N- oder O-Atom als Ringglied enthalten kann,

$R_3$ und $R_4$ unabhängig voneinander Wasserstoff, Alkyl, Alkoxy, Alkanoylamino oder Halogen,

$R_5$ Wasserstoff oder zusammen mit $R_4$ in ortho-Stellung die Ergänzung zu einem ankondensierten Benzolring,

$R_7$ Wasserstoff, gegebenenfalls substituiertes Phenyl oder Alkyl und

$X^{\ominus}$ ein Anion bedeuten.

2. 1,2,3-Thiadiazolazoverbindungen nach Anspruch 1, worin R unsubstituiertes oder durch Hydroxy, Halogen, Cyano, Alkoxy, Carboxy, Aminocarbonyl, Alkoxycarbonyl, Acyloxy, Acyl, Phenyl oder Phenoxy substituiertes Alkyl, $R_1$ Wasserstoff oder unsubstituiertes oder durch Hydroxy, Halogen, Cyano, Alkoxy, Carboxy, Aminocarbonyl, Alkoxycarbonyl, Acyloxy, Acyl, Phenyl oder Phenoxy substituiertes Alkyl, $R_2$ die Bedeutung von $R_1$ hat ode: unsubstituiertes oder durch Cyano, Hydroxy, Halogen, Alkyl oder Alkoxy substituiertes Phenyl, oder $R_1$ und $R_2$ zusammen mit dem N-Atom einen gegebenenfalls alkyl- oder hydroxyalkyl-substituierten 5- oder 6-gliedrigen heterocyclischen Ring, der gegebenenfalls zusätzlich noch ein N- oder O-Atom als Ringglied enthalten kann oder $R_1$ zusammen mit $R_3$ in ortho-Stellung zur Aminogruppe einen teilhydrierten, gegebenenfalls mit Alkyl oder Alkoxy substituierten 5- oder 6-gliedrigen heterocyclischen Ring, der gegebenenfalls zusätzlich noch ein N- oder O-Atom als Ringglied enthalten kann, bedeuten, $R_7$ Wasserstoff ist und $R_3$, $R_4$, $R_5$ und $X^{\ominus}$ wie in Anspruch 1 definiert sind.

3. 1,2,3-Thiadiazolazoverbindungen nach Anspruch 1 oder 2, worin R unsubstituiertes oder durch Hydroxy, Halogen, Cyano, Phenyl oder $C_1$—$C_4$-Alkoxy substituiertes $C_1$—$C_4$-Alkyl, $R_1$ und $R_2$ unabhängig jeweils Wasserstoff oder unsubstituiertes oder durch Hydroxy, Halogen, Cyano, $C_1$—$C_4$-Alkoxy, Carboxy, Aminocarbonyl, Phenyl oder $C_1$—$C_5$-Alkoxycarbonyl substituiertes $C_1$—$C_4$-Alkyl oder $R_1$ und $R_2$ zusammen mit dem N-Atom einen gegebenenfalls durch $C_1$—$C_4$-Alkyl oder $C_1$—$C_4$-Hydroxyalkyl substituierten Pyrrolidin-, Piperidin-, Morpholin- oder Piperazinring oder $R_1$ zusammen mit $R_3$ in ortho-Stellung zur Aminogruppe und mit dem ankondensierten Benzolring einen gegebenenfalls durch $C_1$—$C_4$-Alkyl substituierten Dihydroindol-, Tetrahydrochinolin-, Tetrahydrochinoxalin- oder Tetrahydro-1,4-benzoxazinring, $R_3$ und $R_4$ unabhängig voneinander Wasserstoff, $C_1$—$C_4$-Alkyl, $C_1$—$C_4$-Alkoxy oder Halogen und $R_5$ Wasserstoff oder zusammen mit $R_4$ in ortho-Stellung die Ergänzung zu einem ankondensierten Benzolring und $R_7$ Wasserstoff bedeuten.

4. 1,2,3-Thiadiazolazoverbindungen nach einem der Ansprüche 1 bis 3, worin mindestens einer, vorzugsweise beide, Reste $R_1$ und $R_2$ von Wasserstoff verschieden sind.

5. 1,2,3-Thiadiazolazoverbindungen nach einem der Ansprüche 1—4, worin $R_4$, $R_5$ und $R_7$ Wasserstoff und $R_3$ Wasserstoff oder zusammen mit $R_1$ in ortho-Stellung zur Aminogruppe und mit dem ankondensierten Benzolring einen unsubstituierten oder mit 1 bis 5 $C_1$—$C_4$-Alkyl, vorzugsweise Methylgruppen, substituierten Dihydroindol- oder Tetrahydrochinolinrest bedeuten.

6. 1,2,3-Thiadiazolazoverbindungen nach einem der Ansprüche 1—4, worin R $C_1$—$C_4$-Alkyl, $C_1$—$C_4$-Hydroxyalkyl oder Benzyl, $R_1$ und $R_2$ unabhängig voneinander $C_1$—$C_4$-Alkyl, $C_1$—$C_4$-Hydroxyalkyl, $C_1$—$C_4$-Alkoxy-$C_1$—$C_4$-Alkyl, $C_1$—$C_5$-Cyanoalkyl, $C_1$—$C_4$-Halogenalkyl oder Benzyl oder $R_1$ und $R_2$ zusammen mit dem N-Atom einen Piperidin-, Morpholin- oder Piperazinring oder $R_1$ zusammen mit $R_3$ in ortho-Stellung zur Aminogruppe und mit dem ankondensierten Benzolring einen gegebenenfalls mit 1 bis 4 $C_1$—$C_4$-Alkyl-, vorzugsweise Methylgruppen, substituierten Tetrahydrochinolinrest, $R_3$ Wasserstoff oder zusammen mit $R_1$ den vorstehend beschriebenen Rest, $R_4$ Wasserstoff, $C_1$—$C_4$-Alkyl, $C_1$—$C_4$-Alkoxy oder Halogen, vorzugsweise Wasserstoff, und $R_5$ und $R_7$ Wasserstoff bedeuten.

7. 1,2,3-Thiadiazolazoverbindungen nach Anspruch 6, worin R $C_1$—$C_4$-Alkyl, $R_1$ und $R_2$ unabhängig voneinander $C_1$—$C_4$-Alkyl oder $R_1$ zusammen mit $R_3$ in ortho-Stellung zur Aminogruppe und mit dem ankondensierten Benzolring einen unsubstituierten oder mit 1—4 Methylgruppen substituierten Tetrahydrochinolinrest, $R_3$ Wasserstoff oder zusammen mit $R_1$ den vorstehend beschriebenen Rest und $R_4$, $R_5$ und $R_7$ jeweils Wasserstoff bedeuten.

8. 1,2,3-Thiadiazolazoverbindungen nach einem der Ansprüche 1—7, worin $X^{\ominus}$ ein Halogenid-, Bortetrafluorid-, Rhodanid-, Sulfat-, Alkylsulfat-, Aminosulfat-, Chlorat-, Perchlorat-, Carbonat-, Bicarbonat-, Phosphat-, Phosphormolybdat-, Phosphorwolframat-, Phosphorwolframmolybdat-, Benzolsulfonat-, Chlorbenzolsulfonat-, Naphthalinsulfonat-, Toluolsulfonat-, Oxalat-, Maleinat-, Formiat-, Acetat-, Propionat-, Lactat-, Succinat-, Chloracetat-, Tartrat-, Methansulfonat- oder Benzoation oder ein komplexes Anion, vorzugsweise ein Tetrachlorzinkation, bedeutet.

9. 1,2,3-Thiadiazolazoverbindungen nach Anspruch 8, worin $X^{\ominus}$ ein Halogenid-, Methylsulfat-, Aethylsulfat-, Phosphat-, Sulfat-, Carbonat-, Benzolsulfonat-, Toluolsulfonat, 4-Chlorbenzolsulfonat-, Acetat-, Formiat- oder Tetrachlorzinkation bedeutet.

10. Verfahren zur Herstellung der in Anspruch 1 definierten 1,2,3-Thiadiazolazoverbindungen, dadurch

gekennzeichnet, dass man 5-Amino-1,2,3-thiadiazol, das in 4-Stellung durch Alkyl oder gegebenenfalls substituiertes Phenyl substituiert sein kann, diazotiert, auf eine Kupplungskomponente der Formel

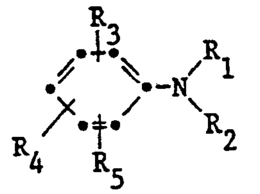
(2)

kuppelt und das Kupplungsprodukt mit einer Verbindung der Formel R—X′ quaterniert, wobei R bis $R_5$ wie in Anspruch 1 definiert sind und X′ einen bei der Quaternierung in das Anion $X^{\ominus}$ überführbaren Rest bedeutet.

11. Verwendung der in Anspruch 1 definierten 1,2,3-Thiadiazolazoverbindungen zum Färben oder Bedrucken von mit kationischen Farbstoffen färbbaren Substraten.

12. Verwendung nach Anspruch 11 zum Färben oder Bedrucken von Textilmaterial.

13. Verwendung nach Anspruch 12 zum Färben oder Bedrucken von Textilfasern aus Polyacrylnitril, sauer modifiziertem Polyamid oder sauer modifiziertem Polyester.

14. Verwendung nach Anspruch 13 zum Färben oder Bedrucken von Polyacrylnitrilmaterial, oder Mischgewebe aus diesem und Wolle.

15. Gefärbtes oder bedrucktes Material erhältlich durch das Verfahren nach einem der Ansprüche 11 bis 14.

**Revendications**

1. Composés azo-1,2,3-thiadiazoles répondant à la formule

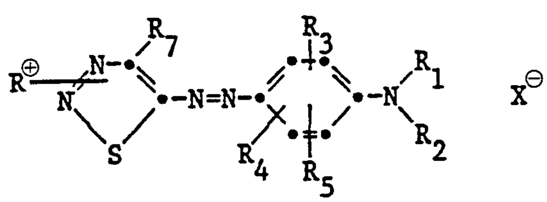
(1),

dans laquelle

R désigne un groupe alkyle ou alcényle non substitué ou substitué,

$R_1$ désigne un atome d'hydrogène ou un groupe alkyle ou alcényle non substitué ou substitué,

$R_2$ désigne un atome d'hydrogène ou un groupe alkyle, alcényle, cycloalkyle ou phényle non substitué ou substitué, ou bien

$R_1$ et $R_2$ désignent avec l'atome d'azote un cycle hétérocyclique à 5 ou 6 maillons qui peut encore contenir le cas échéant un ou deux autres hétéroatomes comme maillons du cycle ou/et être substitüé, ou bien $R_1$ désigne avec $R_3$ en position ortho par rapport au groupe amino un cycle hétérocyclique à 5 ou 6 maillons éventuellement substitués, qui peut encore contenir un atome de N ou O supplémentaire comme maillon du cycle,

$R_3$ et $R_4$ désignent indépendamment l'un de l'autre un atome d'hydrogène, un groupe alkyle, alcoxy, alcanoylamino ou un atome d'halogène,

$R_5$ désigne un atome d'hydrogène ou avec $R_4$ en position ortho le complément à un cycle benzénique condensé, $R_7$ désigne un atome d'hydrogène, un groupe phényle ou alkyle éventuellement substitué et

$X^{\ominus}$ désigne un anion.

2. Composés azo-1,2,3-thiadiazoles selon la revendication 1, dans lesquels R désigne un groupe alkyle non substitué ou substitué par un groupe hydroxy, halogène, cyano, alcoxy, carboxy, aminocarbonyle, alcoxycarbonyle, acyloxy, acyle, phényle ou phénoxy, $R_1$ désigne un atome d'hydrogène ou un groupe alkyle non substitué ou substitué par un groupe hydroxy, halogène, cyano, alcoxy, carboxy, aminocarbonyle, alcoxycarbonyle, acyloxy, acyle, phényle ou phénoxy, $R_2$ a la même signification que $R_1$ ou désigne un groupe phényle non substitué ou substitué par un groupe cyano, hydroxy, halogène, alkyle ou alcoxy, ou bien $R_1$ et $R_2$ forment avec l'atome de N un cycle hétérocyclique à 5 ou 6 maillons éventuellement substitué par un groupe alkyle ou hydroxyalkyle, qui peut encore contenir le cas échéant un atome de N ou de O comme maillon du cycle, ou bien $R_1$ forme avec $R_3$ en position ortho par rapport au groupe amino un cycle hétérocyclique à 5 ou 6 maillons, partiellement hydrogéné, substitué le cas échéant par un groupe alkyle ou alcoxy, qui peut encore contenir le cas échéant un atome de N ou de O comme maillon du cycle, $R_7$ est un atome d'hydrogène, et $R_3$, $R_4$, $R_5$ et $X^{\ominus}$ sont définis comme dans la revendication 1.

3. Composés azo-1,2,3-thiadiazoles selon les revendications 1 ou 2, dans lesquels R désigne un groupe alkyle en $C_1$—$C_4$ non substitué ou substitué par un groupe hydroxy, halogène, cyano, phényle ou alcoxy en $C_1$—$C_4$, $R_1$ et $R_2$ désignent indépendamment chacun un atome d'hydrogène ou un groupe alkyle en $C_1$—$C_4$

non substitué ou substitué par un groupe hydroxy, halogène, cyano, alcoxy en $C_1$—$C_4$, carboxy, aminocarbonyle, phényle ou (alcoxy en $C_1$—$C_5$)carbonyle, ou bien $R_1$ et $R_2$ forment avec l'atome de N un cycle pyrrolidine, pipéridine, morpholine ou pipérazine éventuellement substitué par un groupe alkyle en $C_1$—$C_4$ ou hydroxyalkyle en $C_1$—$C_4$ ou bien $R_1$ forme avec $R_3$ en position ortho par rapport un groupe amino et avec le cycle benzénique condensé un cycle dihydroindol, tétrahydroquinoléine, tétrahydroquinoxaline ou tétrahydro-1,4-benzoxazine éventuellement substitué par un groupe alkyle en $C_1$—$C_4$, $R_3$ et $R_4$ désignent indépendamment l'un de l'autre un atome d'hydrogène, un groupe alkyle en $C_1$—$C_4$, alcoxy en $C_1$—$C_4$ ou halogène, et $R_5$ désigne un atome d'hydrogène ou avec le $R_4$ en position ortho le complément à un cycle benzénique condensé et $R_7$ désigne un atome d'hydrogène.

4. Composés azo-1,2,3-thiadiazoles selon l'une des revendications 1 à 3, dans lesquels au moins un des radicaux $R_1$ et $R_2$, de préférence les deux, sont différents de l'atome d'hydrogène.

5. Composés azo-1,2,3-thiadiazoles selon l'une des revendications 1 à 4, dans lesquels $R_4$, $R_5$ et $R_7$ désignent un atome d'hydrogène et $R_3$ un atome d'hydrogène ou avec le $R_1$ en position ortho par rapport au groupe amino et avec le cycle benzénique condensé, un radical dihydroindol ou tétrahydroquinoléine non substitué ou substitué par 1 à 5 groupes alkyle en $C_1$—$C_4$, de préférence des groupes méthyle.

6. Composés azo-1,2,3-thiadiazoles selon l'une des revendications 1 ou 4, dans lesquels R désigne un groupe alkyle en $C_1$—$C_4$ hydroxyalkyle en $C_1$—$C_4$ ou benzyle, $R_1$ et $R_2$ désignent indépendamment l'un de l'autre un groupe alkyle en $C_1$—$C_4$, hydroxyalkyle en $C_1$—$C_4$, (alcoxy en $C_1$—$C_4$)(alkyle en $C_1$—$C_4$), cyanoalkyle en $C_1$—$C_5$, halogénoalkyle en $C_1$—$C_4$ ou benzyle, ou bien $R_1$ et $R_2$ désignent avec l'atome de N un cycle pipéridine, morpholine ou pipérazine, ou bien $R_1$ forme avec $R_3$ en position ortho par rapport au groupe amino et avec le cycle benzénique condensé, un radical tétrahydroquinoléine substitué le cas échéant par 1 à 4 groupes alkyle en $C_1$—$C_4$, de préférence des groupes méthyle, $R_3$ désigne un atome d'hydrogène ou avec $R_1$ le radical précédemment décrit, $R_4$ désigne un atome d'hydrogène, un groupe alkyle en $C_1$—$C_4$, alcoxy en $C_1$—$C_4$ ou halogène, de préférence un atome d'hydrogène, et $R_5$ et $R_7$ désignent un atome d'hydrogène.

7. Composés azo-1,2,3-thiadiazoles selon la revendication 6, dans lesquels R désigne un groupe alkyle en $C_1$—$C_4$, $R_1$ et $R_2$ désignent indépendamment l'un de l'autre un groupe alkyle en $C_1$—$C_4$ ou bien $R_1$ désigne avec $R_3$ en position ortho par rapport au groupe amino et avec le cycle benzénique condensé un radical tétrahydroquinoléine non substitué ou substitué par 1 à 4 groupes méthyle, $R_3$ désigne un atome d'hydrogène ou avec $R_1$ le radical précédemment décrit et $R_4$, $R_5$ et $R_7$ désignent chacun un atome d'hydrogène.

8. Composés azo-1,2,3-thiadiazoles selon l'une des revendications 1 à 7, dans lesquels $X^\ominus$ désigne un ion halogénure, borotétrafluorure, sulfocyanure, sulfate, alkylsulfate, aminosulfate, chlorate, perchlorate, carbonate, bicarbonate, phosphate, phosphomolybdate, phosphotungstate, phosphotungstate-molybdate, benzènesulfonate, chlorobenzènesulfonate, naphtalènesulfonate, toluènesulfonate, oxalate, maléate, formiate, acétate, propionate, lactatet, succinate, chloracétate, tartrate, méthanesulfonate ou benzoate ou un anion complexe, de préférence un ion tétrachlorozincate.

9. Composés azo-1,2,3-thiadiazoles selon la revendication 8, dans lesquels $X^\ominus$ désigne un ion halogénure, méthylsulfate, éthylsulfate, phosphate, sulfate, carbonate, benzènesulfonate, toluènesulfonate, 4-chlorobenzènesulfonate, acétate, formiate ou tétrachlorozincate.

10. Procédé de préparation des composés azo-1,2,3-thiadiazoles définis dans la revendication 1, caractérisé en ce qu'on diazote le 5-amino-1,2,3-thiadozole qui peut être substitué en position 4 par un groupe alkyle ou un groupe phényle éventuellement substitué, en ce qu'on le copule sur un constituant de copulation répondant à la formule

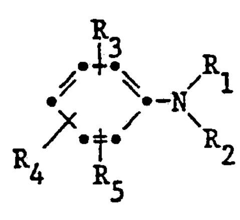

(2)

et en ce qu'on quaternise le produit de la copulation avec un composé répondant à la formule R—X', R à $R_5$ étant tel que défini dans la revendication 1, et X' désignant un radical transformable en l'anion $X^\ominus$ lors de la quaternisation.

11. Utilisation des composés azo-1,2,3-thiadiazoles définis dans la revendication 1 pour la teinture ou l'impression de substrats pouvant être teints par des colorants cationiques.

12. Utilisation selon la revendication 11 pour la teinture ou l'impression des matière textiles.

13. Utilisation selon la revendication 12 pour la teinture ou l'impression de fibres textiles de polyacrylonitrile, de polyamide modifié par les acides ou de polyester modifié par les acides.

14. Utilisation selon la revendication 13 pour la teinture ou l'impression d'un polyacrylonitrile ou de tissu mélangé constitué de cette fibre et de laine.

15. Matière teinte ou imprimée pouvant être obtenue par le procédé suivant l'une des revendications 11 à 14.

**Claims**

1. A 1,2,3-thiadiazole-azo compound of formula

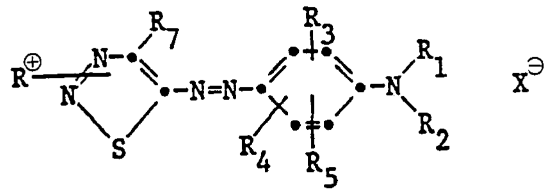 (1),

in which

$R$ is unsubstituted or substituted alkyl or alkenyl,

$R_1$ is hydrogen or unsubstituted or substituted alkyl or alkenyl,

$R_2$ is hydrogen or unsubstituted or substituted alkyl, alkenyl, cycloalkyl or phenyl, or

$R_1$ and $R_2$, together with the nitrogen atom, are a 5- or 6-membered heterocyclic ring which may contain one or two additional hetero atoms as ring members and/or may be substituted, or $R_1$ together with $R_3$ in the ortho position to the amino group form a partially hydrogenated, unsubstituted or substituted 5- or 6-membered heterocyclic ring which may contain an additional H or O atom as ring member,

$R_3$ and $R_4$ are each independently of the other hydrogen, alkyl, alkoxy, alkanoylamino or halogen,

$R_5$ is hydrogen or together with $R_4$ in the ortho-position forms the member which completes a fused benzene ring,

$R_7$ is hydrogen, unsubstituted or substituted phenyl or alkyl, and

$X^{\ominus}$ is an anion.

2. A 1,2,3-thiadiazole-azo compound according to claim 1, in which R is alkyl which is unsubstituted or substituted by hydroxyl, halogen, cyano, alkoxy, carboxyl, aminocarbonyl, alkoxycarbonyl, acyloxy, acyl, phenyl or phenoxy, $R_1$ is hydrogen, alkyl which is unsubstituted or substituted by hydroxyl, halogen, cyano, alkoxy, carboxyl, aminocarbonyl, alkoxycarbonyl, acyloxy, acyl, phenyl or phenoxy, $R_2$ has the meaning of $R_1$ or is phenyl which is unsubstituted or substituted by cyano, hydroxyl, halogen, alkyl or alkoxy, or $R_1$ or $R_2$, together with the nitrogen atom, form a 5- or 6-membered heterocyclic ring which is unsubstituted or substituted by alkyl or hydroxyalkyl and which may contain an additional N or O atom as ring member, or $R_1$ together with $R_3$ in the ortho-position to the amino group form a partially hydrogenated 5- or 6-membered heterocyclic ring which is unsubstituted or substituted by alkyl or alkoxy and which may contain an additional N or O atom as ring member, $R_7$ is hydrogen and $R_3$, $R_4$, $R_5$ and $X^{\ominus}$ are as defined in claim 1.

3. A 1,2,3-thiadiazole-azo compound according to claim 1 or 2, in which R is $C_1$—$C_4$alkyl which is unsubstituted or substituted by hydroxyl, halogen, cyano, phenyl or $C_1$—$C_4$alkoxy, $R_1$ and $R_2$ are each independently of the other hydrogen, $C_1$—$C_4$alkyl which is unsubstituted or substituted by hydroxyl, halogen, cyano, $C_1$—$C_4$-alkoxy, carboxyl, aminocarbonyl, phenyl or $C_1$—$C_5$alkoxycarbonyl, or $R_1$ and $R_2$, together with the nitrogen atom, form a pyrrolidine, piperidine, morpholine or piperazine ring which is unsubstituted or substituted by $C_1$—$C_4$alkyl or $C_1$—$C_4$hydroxyalkyl, or $R_1$ together with $R_3$ in the ortho-position to the amino group and with the fused benzene ring form a dihydroindole, tetrahydroquinoline, tetrahydroquinoxaline or tetrahydro-1,4-benzoxazine ring which is unsubstituted or substituted by $C_1$—$C_4$alkyl, $R_3$ and $R_4$ are each independently of the other hydrogen, $C_1$—$C_4$alkyl, $C_1$—$C_4$alkoxy or halogen, and $R_5$ is hydrogen, or $R_5$ together with $R_4$ in the ortho-position form the member necessary to complete a fused benzene ring, and $R_7$ is hydrogen.

4. A 1,2,3-thiadiazole-azo compound according to any one of claims 1 to 3, in which at least one, but preferably both, of the radicals $R_1$ and $R_2$ are different from hydrogen.

5. A 1,2,3-thiadiazole-azo compound according to any one of claims 1 to 4, in which $R_4$, $R_5$ and $R_7$ are hydrogen, and $R_3$ is hydrogen, or $R_3$ together with $R_1$ in the ortho-position to the amino group and with the fused benzene ring form a dihydroindole or tetrahydroquinoline radical which is unsubstituted or substituted by 1 to 5 $C_1$—$C_4$alkyl groups, preferably methyl groups.

6. A 1,2,3-thiadiazole-azo compound according to any one of claims 1 to 4, in which R is $C_1$—$C_4$alkyl, $C_1$—$C_4$hydroxyalkyl or benzyl, $R_1$ and $R_2$ are each independently of the other $C_1$—$C_4$alkyl, $C_1$—$C_4$hydroxyalkyl, $C_1$—$C_4$alkoxy-$C_1$—$C_4$alkyl, $C_1$—$C_5$cyanoalkyl, $C_1$—$C_4$haloalkyl or benzyl, or $R_1$ and $R_2$, together with the nitrogen atom, form a piperidine, morpholine or piperazine ring, or $R_1$ together with $R_3$ in the ortho-position to the amino group and with the fused benzene ring form a tetrahydroquinoline radical which is unsubstituted or substituted by 1 to 4 $C_1$—$C_4$alkyl groups, preferably methyl groups, $R_3$ is hydrogen or together with $R_1$ forms the tetrahydroquinoline radical as just defined, $R_4$ is hydrogen, $C_1$—$C_4$alkyl, $C_1$—$C_4$alkoxy or halogen, preferably hydrogen, and $R_5$ and $R_7$ are hydrogen.

7. A 1,2,3-thiadiazole-azo compound according to claim 6, in which R is $C_1$—$C_4$alkyl, $R_1$ and $R_2$ are each independently of the other $C_1$—$C_4$alkyl, or $R_1$ together with $R_3$ in the ortho-position to the amino group and with the fused benzene ring form a tetrahydroquinoline ring which is unsubstituted or substituted by 1 to 4 methyl groups, $R_3$ is hydrogen or together with $R_1$ is the tetrahydroquinoline radical as just defined, and $R_4$, $R_5$ and $R_7$ are each hydrogen.

8. A 1,2,3-thiadiazole-azo compound according to any one of claims 1 to 7, in which $X^{\ominus}$ is a halide, boron tetrafluoride, thiocyanide, sulfate, alkylsulfate, aminosulfate, chlorate, perchlorate, carbonate, bicarbonate, phosphate, phosphoromolybdate, phosphorotungstate, phosphorotungstomolybdate, benzenesulfonate, chlorobenzenesulfonate, naphthalenesulfonate, toluenesulfonate, oxalate, maleate, formate, acetate, propionate, lactate, succinate, chloroacetate, tartrate, methanesulfonate or benzoate ion, or is a complex anion, preferably a tetrachlorozincate ion.

9. A 1,2,3-thiadiazole-azo compound according to claim 8, in which $X^{\ominus}$ is a halide, methyl sulfate, ethyl sulfate, phosphate, sulfate, carbonate, benzenesulfonate, toluenesulfonate, 4-chlorobenzenesulfonate, acetate, formate, or tetrachlorozincate ion.

10. A process for the preparation of a 1,2,3-thiadiazole-azo compound as defined in claim 1, which comprises diazotising 5-amino-1,2,3-thiadiazole which is unsubstituted or substituted in the 4-position by alkyl or by unsubstituted or substituted phenyl, and coupling the diazotised thiadiazole to a coupling component of formula

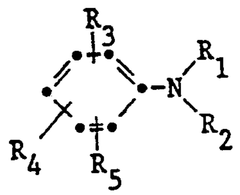

(2)

and quaternising the coupling product with a compound of formula R—X', R to $R_5$ being as defined in claim 1, and X' being a radical which can be converted in the quaternisation into the anion $X^{\ominus}$.

11. Use of a 1,2,3-thiadiazole-azo compound as defined in claim 1 for dyeing or printing substrates which are dyeable with cationic dyes.

12. Use according to claim 11 for dyeing or printing textile material.

13. Use according to claim 12 for dyeing or printing textile fibres made from polyacrylonitrile, acid-modified polyamide or acid-modified polyester.

14. Use according to claim 13 for dyeing or printing polyacrylonitrile material or blend fabrics made from this and wool.

15. Dyed or printed material obtainable by a process as claimed in any one of claims 11 to 14.